# EUROPÄISCHE PATENTSCHRIFT

(11) **EP 3 717 174 B1**
(45) Veröffentlichungstag und Bekanntmachung des Hinweises auf die Patenterteilung: **28.01.2026**
(21) Anmeldenummer: 18830388.7
(22) Anmeldetag: 21.11.2018
(51) Int. Cl.: B23Q 15/12, B44B 3/00, B44C 1/22, G01L 13/00

(54) **MARKIERKOPF MIT DRUCKSENSOR**
MARKING HEAD HAVING A PRESSURE SENSOR
TÊTE DE MARQUAGE À CAPTEUR DE PRESSION

(30) Priorität: 30.11.2017 DE 102017128475
(43) Veröffentlichungstag der Anmeldung: 07.10.2020
(73) Patentinhaber: Rattunde AG, 19288 Ludwigslust (DE)
(72) Erfinder: RATTUNDE, Ulrich, 19288 Ludwigslust (DE)
(74) Vertreter: Groth, Wieland
(86) Internationale Anmeldenummer: PCT/EP2018/082084
(87) Internationale Veröffentlichungsnummer: WO 2019/105828

(56) Entgegenhaltungen:
- DE-B3- 102006 056 388
- DE-U1- 202008 017 427
- DE-U1- 202008 017 427
- FR-A1- 2 327 871
- US-A1- 2016 108 487

## Beschreibung

Die Erfindung betrifft ein Verfahren nach dem Oberbegriff des Anspruchs 1.

Zur Kennzeichnung von Werkstücken sind verschiedenste materialverdrängende Markiersysteme bekannt.

Unter anderem sind Markiersysteme bekannt, bei denen die Markierung mit einer oszillierenden, spitzen, harten Nadel durchgeführt wird, die durch mindestens zwei Koordinaten verfahrbar ist und dadurch alphanumerische Schriftzeichen und freie Symbole wie QR-Codes, Firmenlogos usw. auf eine Oberfläche markiert. Das Prinzip ist wie das eines Nadeldruckers, nur dass die spitze, oszillierende Nadel viele Punkte nebeneinander in die Materialoberfläche eindrückt und die Markierung dadurch sichtbar wird.

Nachteilig ist es, wenn durch irgendwelche Störvorgänge eine Markierung tatsächlich nicht erfolgt. Zwar können die XY-Koordinatenbahnen der Markierungspunkte überwacht werden, das ist aber keine Gewähr dafür, dass die Markierung wirklich stattgefunden hat.

In der 10 2006 056 388 B3 ist eine Vorrichtung zur Markierung eines Werkstücks mit einem Markierwerkzeug, das mittels eines Stellantriebs entlang einer von einer Steuereinrichtung vorgegebenen Markierungsbahn führbar ist, welcher Vorrichtung eine Markierungsprüfeinheit zugeordnet, die zumindest einen ersten und zweiten Prozessparameter fasst und ein korrespondierendes erstes und zweites Prüfsignal erzeugt, offenbart.

Die US 2016/0108487 A1 offenbart einen pneumatischen Nadler mit zwei Nadeln, wobei jede der Nadeln über den Druck in einem Kolbenraum angetrieben wird und die Nadeln mit einem Steuerventil zusammenwirken, das den Kolbenraum bei ausgefahrener Nadel von der Druckversorgung trennt und bei eingefahrener Nadel mit der Druckversorgung verbindet.

Nachteiligerweise sind die Systeme aufwendig und störanfällig.

In der DE 20 2008 017 427 U1 ist eine Vorrichtung zur Erzeugung eines Zeichens in einer Werkstückoberfläche durch Prägen offenbart. Dort ist ein Abstandsensor an der Prägenadel befestigt, der während des Prägevorgangs Prägetiefen ermittelt. Der Abstandsensor muss schnell beweglich mit der Prägenadel ausgebildet sein und ist daher hohen Belastungen ausgesetzt und verschleißanfällig. Die Vorrichtung ist relativ wartungsintensiv.

Es ist daher Aufgabe der vorliegenden Erfindung, ein Verfahren zur Verfügung zu stellen, das eine einfache Verifikation einer Markierung durch einen Markierkopf ermöglicht.

Die Aufgabe wird durch ein eingangs genanntes Verfahren zur Verifikation einer Markierung mit den Merkmalen des Anspruchs 1 gelöst.

In dem erfindungsgemäßen Verfahren wird Druckluft kontinuierlich einem in einem Nadelkopfgehäuse eines Markierkopfes oszillierenden Kolben, vorzugsweise Nadelkolben zugeführt. Der oszillierende Nadelkolben weist an einem Ende eine Nadel auf, die Markierungen in eine Oberfläche einfügt.

Während der Oszillation treten Druckschwankungen einer Druckluftzuführung auf. Der Druck der Druckluftzuführung wird kontinuierlich gemessen. Es wird ein Druckprofil des Drucks erstellt und mit einem in einer Auswerteeinheit abgelegten Referenzdruckprofil verglichen und ausgewertet.

Vorteilhafterweise wird somit ein Verfahren zur Verfügung gestellt, das wenig störanfällig ist und geringe konstruktive Änderungen gegenüber den bekannten Markierköpfen erforderlich macht. Es wird ein Drucksensor vorgesehen, der bereits an der Druckluftzuführung angeordnet wird. Die von dem Drucksensor gemessenen Druckwerte werden erfasst und ausgewertet. Der Drucksensor sollte sehr schnell sein und Druckschwankungsfrequenzen von bis zu ca. 10 kHz oder sogar noch höhere Frequenzen aufnehmen können.

Die Druckmesswerte werden über die Zeit aufgetragen bzw. gespeichert und ausgewertet.

Dazu wird vorzugsweise zunächst ein Druckverlauf einer frei oszillierenden Nadel gemessen und als freies Referenzdruckprofil in der Auswerteeinheit abgelegt. Das freie Referenzdruckprofil zeigt die über die Zeit verlaufenden Druckänderungen, wenn die Nadel frei schwingt, ohne dass sie auch nur ein einziges Mal in die Oberfläche für eine Markierung eindringt. Eine Frequenz des freien Referenzdruckprofils bleibt über den Zeitverlauf im Wesentlichen gleich, idealerweise konstant.

Zusätzlich oder stattdessen kann der Druckverlauf einer eine Markierung erzeugenden Nadel gemessen und als markierendes Referenzdruckprofil in der Auswerteeinheit abgelegt werden. Dabei wird unter einer eine Markierung erzeugenden Nadel verstanden, dass die Nadel bei jeder Schwingung in die Oberfläche eindringt, also eine perfekte Markierung erzeugt oder zumindest eine beinahe perfekte Markierung erzeugt und zumindest in mehr als 90 Prozent, vorzugsweise mehr als 95 Prozent jeder der Schwingungen in die Oberfläche eindringt. Das markierende Referenzdruckprofil wird in der Auswerteeinheit abgelegt.

Während eines Markiervorganges wird das tatsächliche Druckprofil ständig gemessen. Ständig gemessen bedeutet hier, dass so viele Druckmesswerte ermittelt werden, dass zumindest durch Interpolation oder Ähnliches ein kontinuierlicher Druckverlauf ermittelt werden kann.

Der Druck wird mit dem Drucksensor gemessen und der Auswerteeinheit ebenfalls zugeführt. In der Auswerteeinheit können das daraus ermittelte Druckprofil oder der Druckverlauf mit dem freien Referenzdruckprofil und/oder mit dem markierenden Referenzdruckprofil verglichen werden.

Erfindungsgemäß wird eine Frequenz des freien Referenzdruckprofils bestimmt und kontinuierlich eine Frequenz des Druckprofils gemessen, und die Frequenzen werden miteinander verglichen, und es wird eine Fehlermeldung erzeugt, wenn die Frequenz des Druckprofils nicht kleiner als die Frequenz des freien Druckprofils ist. Wenn die Nadel frei schwingt, hat der zugehörige Nadelkolben den maximalen Hub, und die Frequenz ist bei gleicher Druckluft maximal. Wenn die Nadel in die Oberfläche eindringt, ist der Hub natürlich geringer, da der Kolben nicht erst gegen einen Anschlag schlägt, sondern bereits vorher auf die Oberfläche trifft, und die Frequenz wird größer. Wenn die Frequenz des Druckprofils nicht kleiner als die Frequenz des freien Druckprofils ist, wird eine Fehlermeldung erzeugt. Insbesondere wird also eine Fehlermeldung erzeugt, wenn die Frequenzen der beiden Druckprofile gleich sind, also durch den Vergleich festgestellt wird, dass das Druckprofil zumindest hinsichtlich der Frequenz dem freien Druckprofil entspricht, also die Nadel frei schwingt. In dem Moment liegt ein Fehler in der Markierung vor.

In einer anderen Variante der Auswertung wird das markierende Referenzdruckprofil mit dem Druckprofil verglichen, und bei Abweichungen wird eine Fehlermeldung erzeugt. Der Vergleich der Druckprofile kann dadurch stattfinden, dass vom Druckprofil und auch von dem markierenden Referenzdruckprofil eine Fourier-Analyse durchgeführt wird und die einzelnen Frequenzen der Fourier-Transformierten miteinander verglichen werden.

Vorzugsweise kann auch lediglich eine Fourier-Analyse des Druckprofils durchgeführt werden und durch das Auftreten bestimmter Frequenzen darauf geschlossen werden, wie weit die Nadel abgenutzt ist, ob sich die Härte der Oberfläche verändert hat und weitere Daten.

Vorzugsweise oszilliert die Nadel in einer Z-Richtung hin und her, und die Nadel prägt durch die Oszillation eine Markierung in die Oberfläche ein. Erfindungsgemäß wird der Nadelkolben, an dessen einen Seite die Nadel angeordnet ist, durch Druckluft zur Oberfläche gedrückt und durch eine Federkraft zurückgedrückt. Druckluft und Federkraft spielen zusammen und erzeugen die Oszillationsbewegung des Nadelkolbens. Die Druckluft strömt während der Oszillation in Längsrichtung um den Nadelkolben herum und dann aus einem Auslass aus dem Markierkopf heraus. Lediglich bei maximal eingezogener Stellung ist der Nadelkolben über eine Anschlagsdichtung abgedichtet, so dass keine Luft um den Nadelkolben herumströmen kann. In diesem Moment erzeugt die Druckluft ihren maximalen Druck auf den Nadelkolben und stößt den Nadelkolben in Z-Richtung zur Oberfläche hin ab. Durch die Beschleunigung und die

Trägheit des Nadelkolbens dringt die Nadelspitze in die Oberfläche ein und erzeugt die Markierung. Dabei wird die Feder zusammengedrückt, und nach Einbringen der Markierung wird der Nadelkolben durch die sich entspannende Feder wieder zurück in seine maximal eingezogene Stellung verschoben.

Die Erfindung wird anhand eines Ausführungsbeispiels in sechs Figuren beschrieben. Dabei zeigen:
- Fig. 1: Schnittansicht eines erfindungsgemäßen Markierkopfes,
- Fig. 2a: Schnittansicht des erfindungsgemäßen Markierkopfes während eines Markierverfahrens,
- Fig. 2b: in eine Oberfläche hineingebrachte Markierung,
- Fig. 2c: einen an einem Drucksensor gemessenen Druckverlauf in Abhängigkeit von der Zeit,
- Fig. 3a: erfindungsgemäßer Druckmarkierknopf mit bei frei oszillierender Nadel,
- Fig. 3b: am Drucksensor gemessener Druckverlauf über die Zeit.

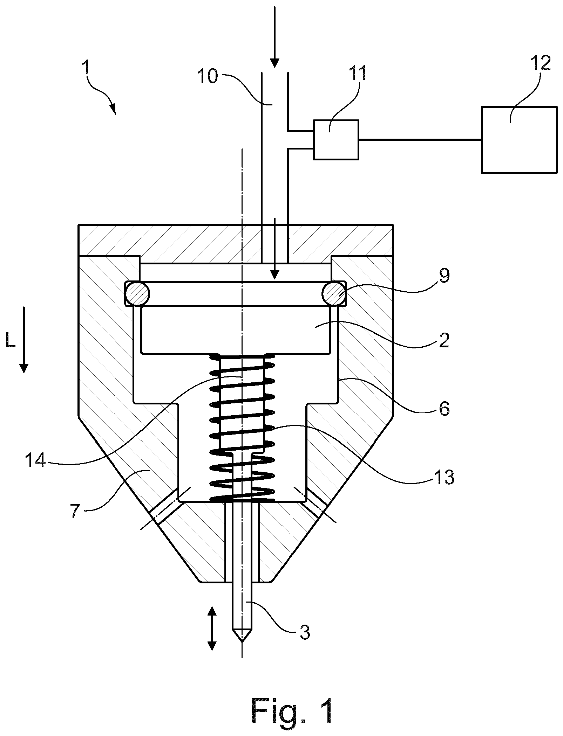

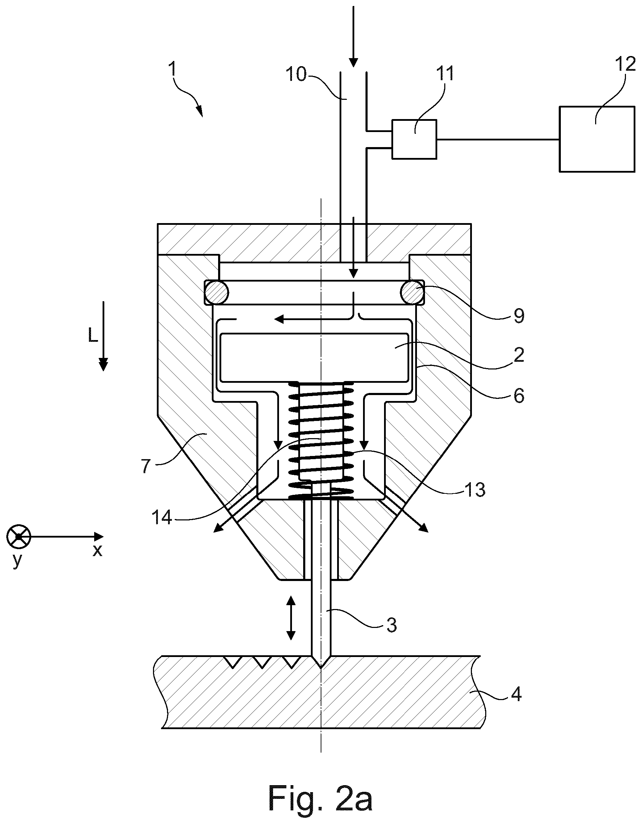

Ein Markierkopf 1 in Fig. 1 weist einen Nadelkolben 2 auf mit einer an einem oberflächenseitigen Ende des Nadelkolbens 2 angeordneten Nadel 3, die aus einem hochfesten Werkstoff, beispielsweise Hartmetall oder Diamant, besteht oder ihn aufweist oder zumindest einen Diamanten an der Spitze aufweist. Der Nadelkolben 2 ist hier im Querschnitt T-förmig ausgebildet. Der Nadelkolben 2 weist entlang seines einer zu beanrbeitenden Oberfläche 4 abgewandten Kopfes die größte Breite auf, jedoch schließt er nicht dicht mit einer Innenwand 6 eines Nadelkopfgehäuses 7 ab, so dass zwischen Nadelkolben 2 und Innenwand 6 des Nadelkopfgehäuses 7 Luft vorbeiströmen kann. Die Luftströmung ist in Fig. 2a mit Pfeilen dargestellt.

Die Nadel 3 ist zum Einbringen einer Markierung 8 in die Oberfläche 4 bestimmt.

In einem der Oberfläche 4 abgewandten Abschnitt ist das Nadelkopfgehäuse 7 mit einem Anschlagdichtung 9 gegenüber dem Nadelkolben 2 abgedichtet. Der abgedichtete Bereich ist mit einer Druckluftzuführung 10 luftleitend verbunden. Über die Druckluftzuführung 10 wird Druckluft in den der Oberfläche 4 abgewandten Abschnitt des Nadelkopfgehäuses 7 kontinuierlich eingelassen. Seitlich an der Druckluftzuführung 10 ist ein Drucksensor 11 angeordnet, der in der Lage ist, Druckschwankungsfrequenzen bis zu 10 kHz aufzunehmen. Der Drucksensor 11 ist elektrisch leitend und datenleitend mit einer Auswerteeinheit 12 verbunden. Die Auswerteeinheit 12 nimmt in einem Speicher den vom Drucksensor 11 gemessenen Druckverlauf über eine Zeit t auf.

Oberflächenseitig ist um ein T-Bein 14 des Nadelkolbens 2 eine Feder 13 gelegt, die eine Gegenkraft zur Druckluft ausübt und im Zusammenspiel mit der Druckluft den Nadelkolben 2 zum Hin-und-her-Schwingen in einer Längsrichtung L anregt. Die Schwingungen können dabei 10 bis 500 Hz betragen, je nach Ausführung des Nadelkopfes 2 können die Frequenzen aber auch niedriger und sogar noch höher sein.

In der in Fig. 1 dargestellten vollständig eingezogenen Stellung der Nadel 4 und des Nadelkolbens 2 schließt das oberflächenabseitige Ende des Nadelkolbens 2 mit dem Anschlagdichtring 9 ab. Die aus der Druckluftzuführung 10 strömende Druckluft übt in dieser Stellung einen Stoßimpuls auf den Nadelkolben 2 aus, und der Nadelkolben 2 wird zur Oberfläche 4 hin beschleunigt. Die Stellung auf dem Wege in Richtung der Oberfläche ist in der Fig. 2a dargestellt. Der Nadelkolben 2 hat sich von dem Anschlagdichtring 9 entfernt, und die Druckluft kann seitlich an dem Nadelkolben 2 vorbeiströmen und in einem oberflächenseitigen Abschnitt des Markierkopfes 1 aus dem Nadelkopfgehäuse 7 heraus in eine Umgebung herausströmen. Dadurch bricht der Druck der Druckluft im oberflächenabseitigen Abschnitt des Innenraumes des Nadelkopfgehäuses 7 zusammen. Der Drucksensor 11 erfährt in der Stellung gemäß Fig. 1 in völlig eingezogenem Zustand einen maximalen Impuls. Bei der Herabbewegung des Nadelkolbens 2 verringert sich der vom Drucksensor 11 gemessene Druck.

Während der Herabbewegung des Nadelkolbens 2 wird die Feder 13 zusammengedrückt, und die zusammengedrückte Feder 13 drückt den Nadelkolben 2 wieder in die andere Richtung, wodurch sich der Druck am Drucksensor 11 wiederum erhöht.

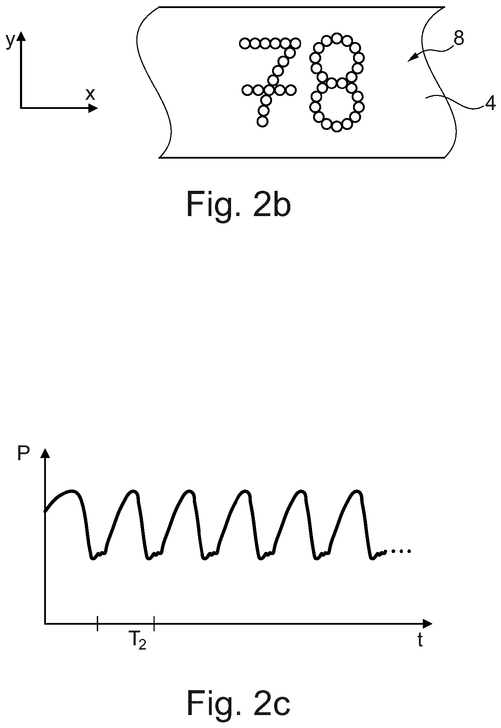

Es entsteht eine schnell oszillierende Bewegung der Nadel 3, die dazu genutzt wird, die Markierung 8 in die Oberfläche 4 einzubringen. Die Bewegung der Nadel 3 erfolgt in der Längsrichtung L, die hier einer Z-Richtung entspricht, während der Markierkopf 1 durch eine Steuerung, beispielsweise eine CN-Steuerung o. Ä., in einer XY-Ebene bewegt wird und dabei die Nadel 3 freie Symbole wie beispielsweise QR-Codes, Firmenlogos usw. auf die Oberfläche 4 markiert. In der Fig. 2b ist die Markierung 8 in Form der Zahl "78" gewählt.

Während der Herabbewegung der Nadel 3 in Z-Richtung auf die Oberfläche 4 wird die Bewegung, wenn die Nadelspitze die Oberfläche 4 trifft, natürlich gestoppt, und die Feder 13 drückt den Nadelkolben 2 sofort wieder nach oben hoch, von der Oberfläche 4 weg. Diese Stellung ist in Fig. 2a dargestellt.

Je dichter die Oberfläche 4 an dem Markierkopf 1 positioniert ist, desto geringer wird ein Hub einer Hubbewegung des Nadelkolbens 2, und dadurch wird die Frequenz der Hin-und-herBewegung der Nadel 3 größer, oder anders gesagt, die Zeitdauer einer Schwingungsperiode wird größer.

Wenn die Nadel 3 die Oberfläche 4 trifft, die Bewegung also plötzlich unterbrochen wird, misst der Drucksensor 11 bestimmt Impulse, die exemplarisch in Fig. 2c in den Tälern des ansonsten im Wesentlichen sinusförmig verlaufenden Druckverlaufs dargestellt sind.

In der Fig. 2c ist ein markierendes Druckprofil dargestellt. Die Täler des Druckprofils geben auch Aufschluss über die Abnutzung des Nadelkopfes, über die Festigkeit der Oberfläche und über die Eindringtiefe der Nadelspitze in die Oberfläche 4. Eine Analyse des markierenden Druckprofils kann durch Fourier-Analyse des Druckprofiles gewonnen werden, die allerdings nicht dargestellt ist.

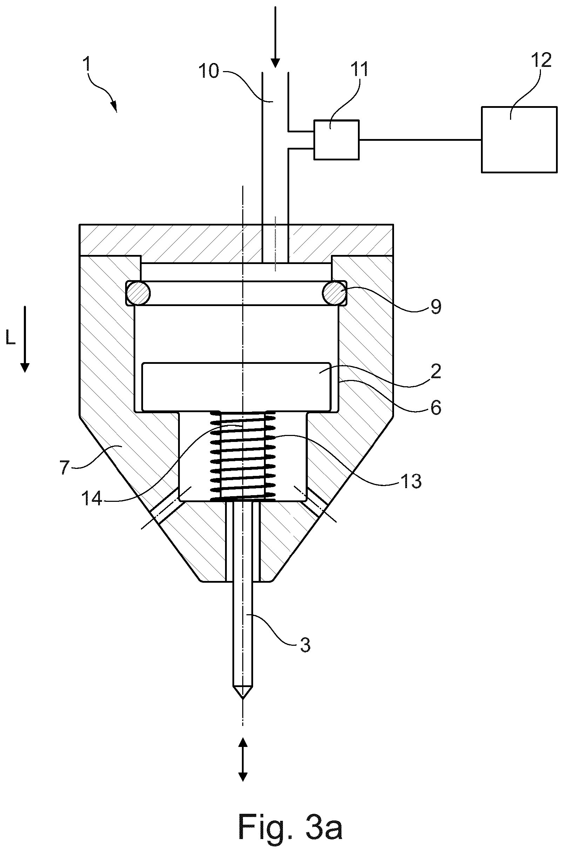

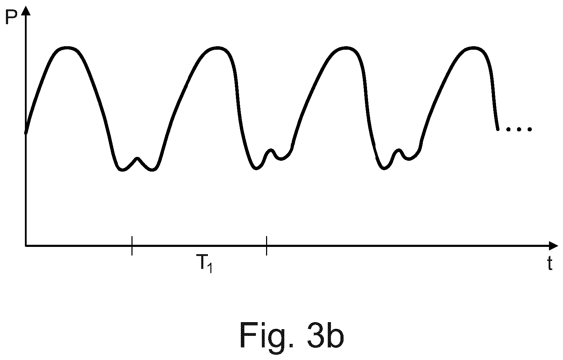

In den Fig. 3a und 3b ist derselbe Markierkopf 1 mit oszillierendem Nadelkolben 2 dargestellt, wobei jedoch keine Oberfläche 4 vorhanden ist. Der Nadelkolben 2 oszilliert frei, und es wird in Fig. 3b ein freies Referenzdruckprofil gemessen. Dadurch, dass der Hub des Nadelkolbens 2 einer freien Oszillationsbewegung größer ist als der Hub des Nadelkolbens 2 einer markierenden Oszillationsbewegung, wird die Frequenz kleiner sein, also eine Zeitdauer T1 einer Periode des freien Referenzdruckprofils wird größer sein als eine Zeitdauer T2 einer Periode des markierenden Druckprofils.

Darüber hinaus stellt sich in den Tälern des Druckprofils aufgrund des Kontaktes mit der Oberfläche 4 ein Kurvenverlauf ein, der ebenfalls vom Kurvenverlauf des markierenden Druckprofils abweicht.

Es soll durch den Drucksensor 11 und die an ihm angeschaltete Auswerteeinheit 12 bestimmt werden, ob die Nadel 3 während der Oszillation oder Vibration tatsächlich die Markierung 8 in die Oberfläche 4 einbringt oder ob die Nadel 3 möglicherweise frei schwingt oder verklemmt ist oder etwas Ähnliches, also keine Markierung 8 in die Oberfläche 4 einbringt. Dazu wird das in Fig. 3b vorab gemessene freie Referenzdruckprofil in einem Speicher der Auswerteeinheit 12 abgelegt.

Das freie Referenzdruckprofil gemäß Fig. 3b gibt Aufschluss über den Druckverlauf des Markierkopfes 1 in seinem gegenwärtigen Zustand, wenn die Nadel 3 frei oszilliert und keine Markierung 8 in die Oberfläche 4 einbringt. Während des Markierverfahrens wird gemäß Fig. 2a fortlaufend der Druck mit dem Drucksensor 11 gemessen und der Auswerteeinheit 12 zugeführt. Das markierende Druckprofil kann gespeichert werden, zumindest kurzfristig gespeichert werden. Das markierende Druckprofil muss sich von dem freien Referenzdruckprofil ständig und fortlaufend insbesondere in den Tälern unterscheiden. Sollte die Nadel 3 während einiger Perioden oder auch nur einer Periode frei schwingen, etwa dadurch, dass die Oberfläche 4 zu weit von der Nadel 3 entfernt ist, nimmt das markierende Druckprofil der Fig. 2c die gleiche Gestalt an oder im Wesentlichen zumindest die gleiche Gestalt an wie das freie Referenzdruckprofil der Fig. 3b. Durch Vergleich der beiden Druckprofile können genau die Zeitspannen ermittelt, in denen die Nadel 3 frei schwingt und keine Markierung 8 in die Oberfläche 4 einbringt. Es wird dann ein Fehlersignal erzeugt, die Markierung 8 abgebrochen oder zumindest ein Hinweis darauf gegeben, dass hier eine Störung des Markierverfahrens vorliegt.

Darüber hinaus ist in der Auswerteeinheit 12 auch ein markierendes Referenzdruckprofil abgelegt. Dabei handelt es sich um ein Referenzdruckprofil, das ermittelt wird, wenn eine perfekter oder zumindest eine nahezu perfekte Markierung 8 durchgeführt wird, also jede Oszillationsbewegung in die Oberfläche 4 eindringt. Das während eines Markiervorganges tatsächlich auftretende markierende Druckprofil wird vorzugsweise zusätzlich zum Vergleich mit dem freien Referenzdruckprofil auch mit dem markierenden Referenzdruckprofil verglichen. Bei Abweichungen des markierenden Druckprofils vom markierenden Referenzdruckprofil wird ebenfalls ein Fehlersignal herausgegeben, um zu signalisieren, dass eine Unregelmäßigkeit im Markierverfahren vorliegt. Die Markierungen 8 können dann automatisch aussortiert werden, oder zumindest kann dem Bedienpersonal eine Fehlermeldung zugeführt werden.

### Bezugszeichenliste

- 1: Markierkopf
- 2: Nadelkolben
- 3: Nadel
- 4: Oberfläche

- 6: Innenwand
- 7: Nadelkopfgehäuse
- 8: Markierung
- 9: Anschlagdichtring
- 10: Druckluftzuführung

- 11: Drucksensor
- 12: Auswerteeinheit
- 13: Feder
- 14: T-Bein

- L: Längsrichtung

- t: Zeit

- T1: Zeitdauer
- T2: Zeitdauer

## Patentansprüche

1. Verfahren zur Verifikation einer Markierung (8),
indem Druckluft in einen einer Oberfläche (4) abgewandten Abschnitt eines Nadelkopfgehäuses (7) eines Markierkopfes (1), in dem ein Nadelkolben (2) oszilliert, zugeführt wird, der an einem Ende eine Nadel (3) aufweist, die die Markierung (8) in die Oberfläche (4) einfügt,
während der Oszillation Druckschwankungen in einer Druckluftzuführung (10) ausgebildet werden,
Luftdruck in der Druckluftzuführung (10) kontinuierlich gemessen wird,
der Nadelkolben (2) in einer Z-Richtung hin und her oszilliert und die Nadel (3) durch die Oszillation die Markierung (8) in die Oberfläche (4) einprägt und der Nadelkolben (2) durch die Druckluft zur Oberfläche (4) gedrückt und dabei eine Feder (13) zusammengedrückt wird und durch die sich entspannende Feder (13) zurückgedrückt wird,
**dadurch gekennzeichnet, dass**
Druckluft kontinuierlich in den der Oberfläche (4) abgewandten Abschnitt des Nadelkopfgehäuses (7) zugeführt wird, wobei das Nadelkopfgehäuse (7) mittels eines Anschlagdichtringes (9) gegenüber dem Nadelkolben (2) abgedichtet ist und ein abgedichteter Bereich mit einer Druckluftzuführung (10) luftleitend verbunden ist, Luftdruck durch einen in der Druckluftzuführung (10) angeordneten Drucksensor (11) kontinuierlich gemessen wird,
ein Druckprofil erstellt wird und mit einem in einer Auswerteeinheit (12) abgelegten Referenzdruckprofil verglichen wird und ausgewertet wird,
die Druckluft während der Oszillation um den Nadelkolben (2) herum aus einem Auslass aus dem Nadelkolbengehäuse (7) des Markierkopfes (1) herausströmt, und in einer maximal eingezogenen Stellung wird ein Vorbeiströmen der Druckluft am Nadelkolben (2) mittels eines Anschlagdichtrings (9) verhindert.

2. Verfahren nach Anspruch 1,
**dadurch gekennzeichnet, dass** ein Druckverlauf der frei oszillierenden Nadel (3) gemessen wird und als ein freies Referenzdruckprofil in der Auswerteeinheit (12) abgelegt wird.

3. Verfahren nach Anspruch 1 oder 2,
**dadurch gekennzeichnet, dass** der Druckverlauf der die Markierung (8) erzeugenden Nadel (3) gemessen wird und als ein markierendes Referenzdruckprofil in der Auswerteeinheit (12) abgelegt wird.

4. Verfahren nach Anspruch 1, 2 oder 3,
**dadurch gekennzeichnet, dass** eine Frequenz des freien Referenzdruckprofils bestimmt wird und kontinuierlich eine Frequenz des Druckprofils gemessen wird und die Frequenzen miteinander verglichen werden und eine Fehlermeldung erzeugt wird, wenn die Frequenz des Druckprofils nicht kleiner als die Frequenz des freien Druckprofils ist.

5. Verfahren nach einem der Ansprüche 1 bis 4,
**dadurch gekennzeichnet, dass** das markierende Referenzdruckprofil mit dem Druckprofil verglichen wird und bei Abweichungen eine Fehlermeldung erzeugt wird.

## Claims

1. Method for verifying a marking (8), wherein
compressed air is supplied to a section of a needle head housing (7) of a marking head (1) facing away from a surface (4), in which a needle piston (2) oscillates, which has a needle (3) at one end that inserts the marking (8) into the surface (4),
whereby pressure fluctuations are formed in a compressed air supply line (10) during the oscillation,
the air pressure in the compressed air supply line (10) is continuously measured, the needle piston (2) oscillates back and forth in a Z direction and the needle (3) embosses the marking (8) into the surface (4) by the oscillation (4) and the needle piston (2) is pressed against the surface (4) by the compressed air, thereby compressing a spring (13), and is pushed back by the relaxing spring (13),
**characterised in that**
compressed air is continuously supplied to the section of the needle head housing (7) facing away from the surface (4), wherein the needle head housing (7) is sealed against the needle piston (2) by means of a gasket ring (9) and a sealed area is connected to a compressed air supply line (10) in such a way that air can pass through, air pressure is continuously measured by a pressure sensor (11) arranged in the compressed air supply line (10),
a pressure profile is created and compared with a reference pressure profile stored in an evaluation unit (12) and evaluated,
the compressed air flows around the needle piston (2) out of an outlet from the needle piston housing (7) of the marking head (1) during oscillation, and in a maximum retracted position, a gasket ring (9) prevents the compressed air from flowing past the needle piston (2).

2. Method according to claim 1,
**characterised in that** a pressure curve of the freely oscillating needle (3) is measured and stored as a free reference pressure profile in the evaluation unit (12).

3. Method according to claim 1 or 2,
**characterised in that** the pressure curve of the needle (3) producing the marking (8) is measured and stored as a marking reference pressure profile in the evaluation unit (12).

4. Method according to claim 1, 2 or 3,
**characterised in that** a frequency of the free reference pressure profile is determined and a frequency of the pressure profile is continuously measured and the frequencies are compared with each other and an error message is generated if the frequency of the pressure profile is not smaller than the frequency of the free pressure profile.

5. Method according to one of claims 1 to 4,
**characterised in that** the marking reference pressure profile is compared with the pressure profile and an error message is generated in the event of deviations.

## Revendications

1. Procédé de vérification d'un marquage (8),
en ce que de l'air comprimé est amené dans une section, opposée à une surface (4), d'un boîtier (7) de tête d'aiguille d'une tête de marquage (1), dans laquelle un piston (2) à aiguille oscille, qui comporte sur une extrémité une aiguille (3), qui insère le marquage (8) dans la surface (4),
des fluctuations de pression sont formées dans une arrivée (10) d'air comprimé au cours de l'oscillation,
la pression de l'air est mesurée en continu dans l'arrivée (10) d'air comprimé,
le piston (2) à aiguille oscille en va-et-vient dans une direction Z et l'aiguille (3) imprime par l'oscillation le marquage (8) dans la surface (4) et le piston (2) à aiguille est poussé vers la surface (4) par l'air comprimé, un ressort (13) étant ainsi comprimé, et est repoussé par le ressort (13) qui se détend,
**caractérisé en ce que**
de l'air comprimé est amené en continu dans la section, opposée à la surface (4), du boîtier (7) de tête d'aiguille, le boîtier (7) de tête d'aiguille étant étanchéifié par rapport au piston (2) à aiguille au moyen d'une bague d'étanchéité de butée (9) et une zone étanchéifiée étant reliée avec acheminement d'air à une arrivée (10) d'air comprimé, la pression de l'air étant mesurée en continu par un capteur de pression (11) disposé dans l'arrivée (10) d'air comprimé,
un profil de pression est créé et est comparé à un profil de pression de référence enregistré dans une unité d'analyse (12) et est analysé,
l'air comprimé est évacué hors d'une sortie hors du boîtier (7) de piston à aiguille de la tête de marquage (1) pendant l'oscillation tout autour du piston (2) à aiguille, et un écoulement de l'air comprimé le long du piston (2) à aiguille est empêché au moyen d'une bague d'étanchéité de butée (9) dans une position rentrée au maximum.

2. Procédé selon la revendication 1,
**caractérisé en ce qu'**une courbe de pression de l'aiguille (3) oscillant librement est mesurée et est enregistrée en tant qu'un profil de pression de référence libre dans l'unité d'analyse (12).

3. Procédé selon la revendication 1 ou 2,
**caractérisé en ce que** la courbe de pression de l'aiguille (3) produisant le marquage (8) est mesurée et est enregistrée en tant qu'un profil de pression de référence de marquage dans l'unité d'analyse (12).

4. Procédé selon la revendication 1, 2 ou 3,
**caractérisé en ce qu'**une fréquence du profil de pression de référence libre est définie et une fréquence du profil de pression est mesurée en continu et les fréquences sont comparées les unes aux autres et un message d'erreur est généré lorsque la fréquence du profil de pression n'est pas inférieure à la fréquence du profil de pression libre.

5. Procédé selon l'une des revendications 1 à 4,
**caractérisé en ce que** le profil de pression de référence de marquage est comparé au profil de pression et un message d'erreur est généré en cas d'écarts.
